# FASCICULE DE BREVET EUROPEEN

(11) **EP 4 142 251 B1**
(45) Date de publication et mention de la délivrance du brevet: **28.01.2026**
(21) Numéro de dépôt: 22192448.3
(22) Date de dépôt: 26.08.2022
(51) Int. Cl.: H04L 61/45, H04L 45/302, H04L 61/58, H04L 67/61, H04L 101/622

(54) **PROCÉDÉ DE TRAITEMENT D'UNE REQUÊTE D'INTÉRÊT DANS UN RÉSEAU NDN**
VERFAHREN ZUR BEARBEITUNG EINER INTERESSENSANFRAGE IN EINEM NDN-NETZWERK
METHOD FOR PROCESSING A REQUEST OF INTEREST IN AN NDN NETWORK

(30) Priorité: 27.08.2021 FR 2108981
(43) Date de publication de la demande: 01.03.2023
(73) Titulaire: THALES, 92190 Meudon (FR)
(72) Inventeur: KHALIFE, Hicham, 92622 Gennevilliers Cedex (FR); NAVES, Raphaël, 92622 Gennevilliers Cedex (FR); THEBAULT, Didier, 92622 Gennevilliers Cedex (FR); CONAN, Vania, 92622 Gennevilliers Cedex (FR)
(74) Mandataire: Atout PI Laplace

(56) Documents cités:
- US-A1- 2015 256 417
- US-A1- 2018 145 927

## Description

### Domaine technique

La présente invention concerne un procédé de traitement d'une requête d'intérêt pour l'accès à un contenu dans un réseau orienté données, un nœud du réseau orienté données, ainsi que ledit réseau orienté données et un produit programme d'ordinateur.

### Technique antérieure

Un réseau orienté données (également appelé réseau NDN pour « Named-Data Networking » en anglais) est un réseau de communication s'appuyant sur une pluralité de nœuds adaptés pour stocker des contenus. Un exemple de réseau NDN a par exemple été décrit dans US 2018/145927 A1. Ces contenus sont accessibles aux nœuds du réseau qui les demandent via des requêtes d'intérêt. Les contenus peuvent alors transiter entre les différents nœuds du réseau au gré des différentes demandes d'intérêt. Les réseaux NDN font partie des réseaux centrés sur l'information dit réseaux ICN pour (« Information-Centric Networking » en anglais). Ces réseaux ICN proposent un nouveau paradigme permettant de dissocier l'information de la localisation de cette dernière. En effet, pour retrouver un contenu il est usuel d'envoyer une requête à l'adresse IP du détenteur de ce contenu. En réalité, cette adresse IP est synonyme de localisation de l'hôte détenant ledit contenu. Les réseaux ICN promeuvent une approche où le contenu est décorrélé de la position et de l'hôte qui le détient.

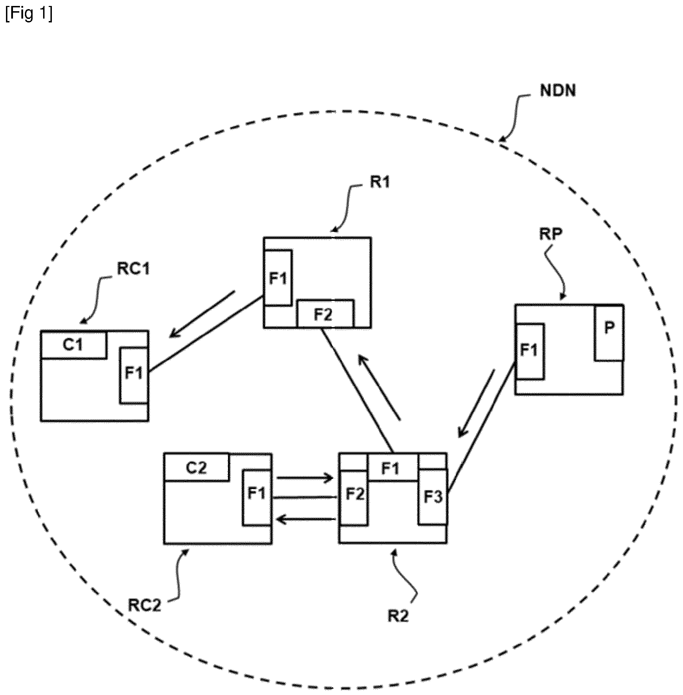

La figure 1 illustre un réseau NDN tel qu'il est connu dans l'état de l'art. Ce réseau NDN s'appuie sur une pluralité de nœuds RC1, RC2, R1, R2, RP. Parmi ces nœuds, on distingue :
- des nœuds consommateurs de contenus RC1, RC2 adaptés pour initier des requêtes d'intérêt ;
- un nœud producteur de contenu RP adapté pour générer des contenus ;
- des nœuds routeurs R1, R2 adaptés pour router les contenus dans le réseau NDN.

Ces nœuds sont des équipements électroniques communicants, tels qu'un ordinateur, un serveur, un smartphone ou une tablette, adaptés pour échanger des données entre eux.

Pour cela les différents nœuds RC1, RC2, R1, R2, RP comprennent des faces F1, F2, F3 pour assurer la connectivité entre eux. En fonction de la couche où le réseau NDN est déployé, les faces peuvent être des interfaces physiques de Forme d'Onde FO, des interfaces réseaux, des connexions TCP, etc.

Chaque contenu est représenté par un nom. C'est ce principe de nommage qui va permettre d'adresser les contenus dans le réseau NDN.

De plus, chaque nœud du réseau NDN maintient un ensemble de tables ou modules NDN parmi lesquels on distingue :
- un module de stockage de contenu (également appelé « Content Store » ou module CS en anglais) identifié sous les références C1, C2, P ;
- un module de de stockage d'informations de relayage (également appelé
   « Forwarding Information Base » en anglais ou module FIB) ;
- un module de stockage de demandes d'intérêt en attente (également appelé
   « Pending Interest Table » en anglais ou module PIT).

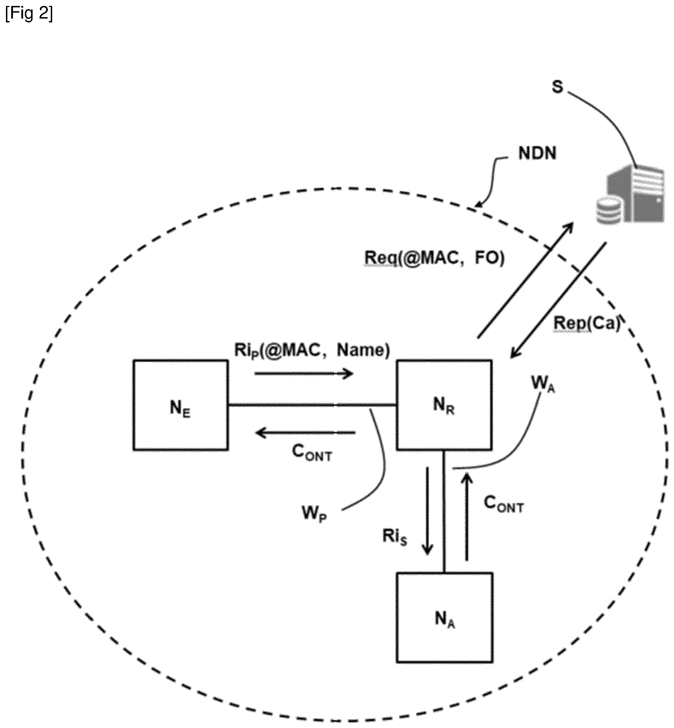

Le protocole associé au réseau NDN fonctionne en mode Pull c'est-à-dire en mode requête/réponse. La figure 2 illustre un exemple de fonctionnement d'un tel réseau NDN.

Dans ce réseau, le nœud producteur de contenu RP produit le contenu dénommé : Video/Cat/HD/Chunk1. Le nœud consommateur RC1 est désireux d'obtenir ce contenu. Pour cela, ce nœud consommateur RC1 envoie une requête d'intérêt appelée « Interest Packet » en anglais. Cette requête comprend le nom du contenu et elle est envoyée via la face F1, conformément à la stratégie de relayage utilisée dans cet exemple et représentée par le module FIB. Le nœud routeur R1 reçoit la requête d'intérêt et vérifie dans son module CS si le contenu recherché est disponible. Si ce contenu n'est pas disponible dans le nœud routeur R1, celui-ci transmet la requête d'intérêt via sa face F2 et inscrit dans son module PIT un intérêt pour Video/Cat/HD/Chunk1 reçu sur sa face F1. Le nœud routeur R2 effectue les mêmes opérations en transmettant via sa face F3 la requête d'intérêt et en inscrivant l'intérêt reçu sur sa face F1 dans son module PIT. Le nœud producteur de contenu RP reçoit la requête d'intérêt pour le contenu qu'il a produit et donc qu'il possède. En retour, il envoie le contenu sous forme de paquets de données (également appelés « Data Packet » en anglais) via son interface de réception. Le nœud routeur R2 reçoit les paquets de données du contenu et il les stocke dans son module CS local. Ces paquets de données sont ensuite relayés selon les informations sauvegardées dans le module PIT via l'interface F1. L'entrée du module PIT correspondant à l'intérêt/contenu en question est ensuite effacée. Le nœud routeur R1 effectue les mêmes opérations que le nœud routeur R2 en direction du nœud consommateur RC1, initiateur de la requête d'intérêt. Si le nœud consommateur RC2 veut également obtenir le contenu Video/Cat/HD/Chunk1, il envoie alors une requête d'intérêt pour ce contenu en direction du nœud routeur R2. Celui-ci reçoit alors la requête d'intérêt et répond avec le contenu sauvegardé au préalable dans son module CS.

Le réseau NDN a été initialement conçu pour des réseaux filaires et Internet. Dans les réseaux sans-fil avec plusieurs liens radio (formes d'onde FO), il est nécessaire de limiter la diffusion de l'intérêt sur certaines de ces formes d'onde et plus généralement de contrôler la diffusion des requêtes d'intérêt afin d'optimiser en retour le chemin des données. Des travaux divulgués dans le document « Closing the Floodgate with Stateless Content-Centric Networking, ICCCN 2017 » et dans le document « Reducing forwarding state in content-centric networks with semi-stateless forwarding, Infocom 2014 » proposent de modifier le module PIT afin de pouvoir adapter de façon plus aisée le chemin des données (chemin retour). En effet, dans un réseau NDN, les données du contenu suivent obligatoirement le sens inverse de la requête d'intérêt grâce à l'information stockée dans ce module PIT. Cependant, les solutions exposées dans ces documents nécessitent des modifications importantes dans le réseau NDN apportant des contraintes supplémentaires pour l'obtention des contenus.

Les documents US2018/145927 et US2015/256417 divulguent un procédé de traitement d'une requête par un nœud récepteur.

Il existe donc un besoin d'améliorer le fonctionnement global d'un réseau orienté données en vue d'optimiser le transfert des contenus entre les nœuds de ce réseau.

### Exposé de l'invention

La présente invention vise à remédier au moins en partie à ce besoin.

Plus particulièrement, la présente invention a pour objectif de résoudre le problème de diffusion et d'inondation de requêtes d'intérêt dans un réseau NDN fonctionnant dans un environnement radio contraint.

Pour cela un premier objet de l'invention concerne un procédé de traitement d'une requête d'intérêt reçue par un nœud récepteur d'un réseau orienté données. La dite requête d'intérêt, dite requête d'intérêt principale, provenant d'un nœud émetteur pour l'accès à un contenu. Le procédé de traitement comprenant dans ledit nœud récepteur une étape de réception de ladite requête d'intérêt principale, cette requête d'intérêt principale comportant un identifiant du nœud émetteur et un nom du contenu. La requête d'intérêt principale est transmise vers le nœud récepteur selon un chemin de transmission prédéterminé entre ledit nœud émetteur et ledit nœud récepteur, ledit chemin de transmission prédéterminé ayant des caractéristiques de transmission associées. Le procédé de traitement comprend également une étape de vérification d'une adéquation entre un niveau de qualité de transmission requis pour la transmission dudit contenu et les caractéristiques de transmission du chemin prédéterminé. Dans le cas où lesdites caractéristiques de transmission du chemin prédéterminé sont insuffisantes pour une transmission du contenu vers le nœud émetteur, la requête d'intérêt principale est rejetée.

Le nœud récepteur permet ainsi de bloquer une requête d'intérêt en se basant sur la qualité du lien réseau dans le sens retour et s'il est estimé que le contenu renvoyé en retour ne pourra pas respecter une certaine qualité de transmission attendue. Plus précisément, quand un nœud récepteur reçoit une requête d'intérêt d'un nœud émetteur, il va évaluer la qualité du lien dans le sens retour (c'est-à-dire la qualité du chemin du nœud récepteur vers le nœud émetteur), avant de relayer sur ses interfaces de sortie la requête d'intérêt vers d'autres nœuds et de garder un état de cette diffusion dans son module PIT. L'invention considère que l'information concernant la qualité du lien dans le sens retour est disponible dans le nœud récepteur. L'invention propose ainsi que l'information concernant la qualité de transmission attendue pour le contenu lié à la requête d'intérêt, est disponible dans le nœud récepteur. On lie alors la qualité demandée par la donnée à la convention de nommage du réseau NDN. Il est alors possible de filtrer une requête d'intérêt au niveau du nœud récepteur en fonction de la qualité des liens, ce qui permet d'assurer une qualité requise pour le transport du contenu dans le sens retour. On limite alors la génération de requêtes d'intérêt inutiles pour lesquelles le contenu associé est incompatible avec le lien dans le sens retour.

Dans un mode de réalisation particulier, dans le cas où les caractéristiques de transmission du chemin prédéterminé sont suffisantes pour la transmission du contenu le procédé de traitement comprend une étape de vérification de la présence du contenu dans le nœud récepteur. Si le contenu est présent dans le nœud récepteur, le procédé de traitement comprend une étape de transmission dudit contenu vers le nœud émetteur via le chemin de transmission prédéterminé.

On s'assure que le contenu sera bien acheminé au nœud émetteur via le lien retour.

Dans un mode de réalisation particulier, si le contenu n'est pas présent dans le nœud récepteur et si les caractéristiques de transmission sont suffisantes vers le nœud émetteur N_{E}, ledit nœud récepteur conserve la requête d'intérêt principale dans son module PIT et transmet une requête d'intérêt secondaire à au moins un autre nœud du réseau via un autre chemin de transmission.

Dans un mode de réalisation particulier, le nœud récepteur reçoit le contenu transmis par l'autre nœud via l'autre chemin, stocke ledit contenu et transmet ledit contenu au nœud émetteur via le chemin prédéterminé.

Dans le sens de retour des données, une fois la requête d'intérêt arrivée à un nœud intermédiaire possédant le contenu, ledit nœud intermédiaire sélectionne le chemin inverse de celui suivi par la requête d'intérêt pour renvoyer les données après évaluation du dernier lien retour, c'est-à-dire du lien entre ce nœud intermédiaire et le nœud précédent qui lui a transmis la requête d'intérêt. Chaque nœud de la chaîne de remontée du contenu vers le nœud émetteur utilise alors son module PIT pour inverser la route. Ce fonctionnement est identique si le nœud possédant le contenu est le nœud producteur du contenu. Le contenu est remonté d'un nœud intermédiaire vers le nœud précédent si le lien entre ces deux nœuds respecte la qualité de transmission requise pour ledit contenu.

Dans un mode de réalisation particulier, suite à la réception de la requête d'intérêt principale par le nœud récepteur, le procédé de traitement comprend une étape d'identification de I( identifiant du nœud émetteur et de la forme d'onde utilisée pour la transmission de la requête d'intérêt principale.

Dans un mode de réalisation particulier, les caractéristiques de transmission du chemin prédéterminé sont obtenues à partir d'un serveur de communication multi-plateformes externe au réseau orienté données.

Ce serveur de communication multi-plateformes est, par exemple, interrogé directement par le nœud récepteur via une requête d'interrogation. Cette requête d'interrogation comprend alors l'identifiant du nœud émetteur et la forme d'onde utilisée. En retour, le serveur de communication fournit les caractéristiques de transmission du chemin prédéterminé. Le nœud récepteur va alors pouvoir évaluer la qualité du chemin prédéterminé sur lequel la requête d'intérêt a été reçue afin d'estimer la capacité dudit chemin à assurer, comme le lien retour, la qualité de service pour le transfert du contenu.

Dans un mode de réalisation particulier, au moins une des caractéristiques de transmission du chemin prédéterminé est choisie parmi une liste de caractéristiques comprenant un débit du chemin prédéterminé, une latence du chemin prédéterminé, un taux de perte ou une durée de vie du chemin prédéterminé, une souveraineté du chemin prédéterminé, un niveau de protection du chemin prédéterminé, un coût d'utilisation du chemin prédéterminé.

Un autre objet de l'invention concerne un nœud récepteur d'un réseau orienté données, ledit nœud récepteur étant adapté pour recevoir une requête d'intérêt pour l'accès à un contenu provenant d'un nœud émetteur. Le nœud récepteur comprend une unité centrale de traitement de données, une interface entrée/sortie, un module de stockage de contenu, un module de stockage d'informations de relayage et un module de stockage de requête d'intérêt en attente. Ces éléments sont configurés pour mettre en œuvre les étapes d'un procédé de traitement de la requête d'intérêt reçue par ledit nœud récepteur, selon l'invention.

Dans un mode de réalisation particulier, l'interface entrée/sortie est compatible avec les formes d'onde 5G.

Les communications entre les différents nœuds du réseau sont réalisées via un réseau de téléphonie classique. En variante, les communications sont réalisées via une constellation de satellites.

Un autre objet de l'invention concerne un réseau orienté données comportant au moins un nœud récepteur selon l'invention.

Un autre objet de l'invention concerne un réseau orienté données utilisé pour la transmission d'un contenu à un utilisateur. Le réseau orienté données est utilisable par un opérateur de télécommunication, un distributeur de contenu, un intégrateur et/ou un fournisseur de solutions de communications pour des réseaux contraints.

Un autre objet de l'invention concerne un programme d'ordinateur comportant des instructions de programme exploitables par un nœud récepteur d'un réseau orienté données, ledit nœud récepteur étant adapté pour recevoir une requête d'intérêt provenant d'un nœud émetteur en vue de l'accès à un contenu, lesdites instructions de programme lorsqu'elles sont exécutées par ledit nœud récepteur déclenchant la mise en œuvre d'un procédé de traitement de la requête d'intérêt selon l'invention.

La présente invention sera mieux comprise à la lecture de la description détaillée de modes de réalisation pris à titre d'exemples nullement limitatifs et illustrés par les dessins annexés sur lesquels :
[Fig 1] la figure 1 illustre un réseau orienté données selon l'art antérieur ;
[Fig 2] la figure 2 illustre un réseau orienté données selon l'invention comprenant un nœud récepteur adapté pour traiter une requête d'intérêt ;
[Fig 3] la figure 3 est un agrandissement du nœud récepteur de la figure 2 ;
[Fig 4] la figure 4 illustre les étapes d'un procédé de traitement de la requête d'intérêt reçue par le nœud récepteur de la figure 2.

La figure 2 illustre un réseau orienté données selon l'invention comprenant ici :
- un nœud émetteur N_{E} ;
- un nœud récepteur N_{R} ;
- un autre nœud N_{A}.

Le nœud émetteur N_{E} est un nœud du réseau adapté pour émettre une requête d'intérêt principale Ri_{P} en direction du nœud récepteur N_{R} via un chemin prédéterminé Wₚ. Le chemin prédéterminé Wₚ est défini par un identifiant @MAC du nœud émetteur N_{E}, par un identifiant @MAC du nœud récepteur N_{R} et par une forme d'onde FO utilisée pour véhiculer la requête d'intérêt principale Ri_{P}. La forme d'onde FO englobe l'ensemble des informations concernant l'onde électromagnétique véhiculant la requête tel qu'une longueur d'onde, une polarisation de l'onde, un comportement ondulatoire, etc.

Le nœud émetteur N_{E} est, par exemple, un smartphone appartenant à un utilisateur désireux d'obtenir un contenu C_{ONT} à consommer, tel qu'un contenu vidéo, un contenu musical ou tout autre type de contenu. La requête principale Ri_{P} comprend l'identifiant @MAC du nœud émetteur N_{E} et un nom Name du contenu C_{ONT}. Le nom Name du contenu C_{ONT} est celui référencé par la convention de nommage du réseau NDN. Il s'agit d'une suite de caractères tel que, par exemple, la suite de caractères : Video/Cat/HD/Chunk1.

On notera que l'identifiant du nœud récepteur N_{R} et l'identifiant du nœud émetteur Nₑ sont, par exemple, des adresses MAC. En variante, ces identifiants sont des adresses IP, ou tout autre forme d'adressage permettant d'identifier le nœud dans le réseau NDN.

Le nœud récepteur N_{R} est adapté pour recevoir la requête d'intérêt principale Ri_{P} et pour la traiter. Ce nœud récepteur N_{R} est un nœud consommateur de contenu, un nœud routeur ou un nœud producteur de contenu. Le nœud récepteur N_{R} traite la requête d'intérêt principale. Pour cela, il transmet une requête d'interrogation Req à un serveur de communication multi-plateformes S. La requête d'interrogation Req comprend l'identifiant @MAC du nœud émetteur N_{E} et la forme d'onde FO utilisée pour véhiculer la requête d'intérêt principale Ri_{P}. Le serveur de communication S a un accès privilégié à l'information de qualité de la forme d'onde. Ainsi, à partir de l'identifiant @MAC du nœud émetteur N_{E}, de la forme d'onde FO utilisée, le serveur de communication S est apte à déduire les caractéristiques Ca de transmission du chemin prédéterminé W_{P}. Ces informations Ca sont transmises par le serveur de communication S au nœud récepteur N_{R} via une requête de réponse Rep. Le nœud récepteur N_{R} est adapté pour déduire le niveau de qualité de transmission requis QoS pour la transmission du contenu C_{ONT} à partir des informations contenu dans le nom NAME de ce contenu C_{ONT}. Par exemple, dans la suite de caractères : Video/Cat/HD/Chunk1, le HD correspond à un haut niveau de qualité.

Dans le cas où le nœud récepteur N_{R} possède le contenu C_{ONT}, celui-ci est transmis au nœud émetteur N_{E} si les caractéristiques Ca de transmission du chemin prédéterminé W_{P} sont compatibles avec le niveau de qualité de transmission requis QoS. Si le nœud récepteur N_{R} ne possède pas le contenu C_{ONT} et si les caractéristiques Ca de transmission du chemin prédéterminé Wₚ sont toujours compatibles avec le niveau de qualité de transmission requis QoS, ledit nœud récepteur N_{R} peut demander ce contenu à l'autre nœud N_{A} via une requête d'intérêt secondaire Ri_{S} qui sera transmise par un autre chemin de transmission W_{A}. L'autre nœud N_{A} est un nœud consommateur de contenu, un nœud routeur ou un nœud producteur de contenu. Si les caractéristiques Ca de transmission du chemin prédéterminé ne sont pas suffisantes pour la transmission du contenu, une réponse NACK de non accord de transfert du contenu C_{ONT} est alors envoyée au nœud émetteur N_{E}.

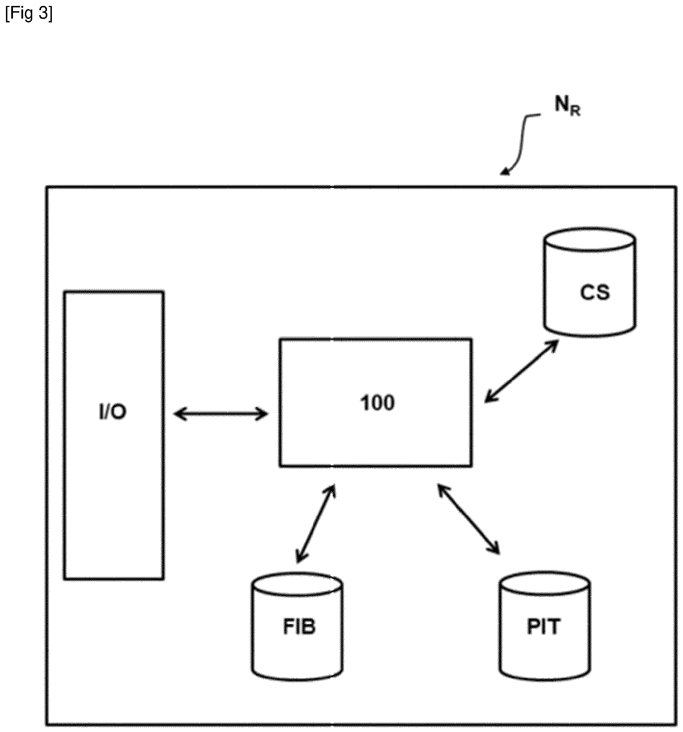

La figure 3 décrit plus en détail la structure d'un nœud récepteur N_{R} selon l'invention. Ce nœud récepteur N_{R} comprend :
- une unité centrale 100 de traitement de données ;
- une interface entrée/sortie I/O ;
- un module CS de stockage de contenu ;
- un module FIB de stockage d'informations de relayage ;
- un module PIT de stockage d'état de requête d'intérêt en attente.

L'unité centrale 100 est adaptée pour traiter la requête d'intérêt principale Ri_{P}. Cette unité 100 interagit avec les autres éléments du nœud récepteur N_{R}.

L'interface entrée/sortie I/O est adaptée pour recevoir la requête d'intérêt principale Ri_{P}. Cette interface I/O possèdent plusieurs faces, chaque face formant un couple entrée/sortie. Ainsi si une requête d'intérêt principale Ri_{P} est reçue sur une entrée de la face, c'est la sortie de cette même face qui sera utilisée pour transmettre le contenu C_{ONT}. Chaque face est associée à une forme d'onde FO utilisée pour véhiculer la requête d'intérêt principale Ri_{P} et le contenu C_{ONT}. Préférentiellement, l'interface entrée/sortie I/O est compatible avec les formes d'onde 5G.

L'interface I/O est également adaptée pour transmettre une requête d'intérêt secondaire Ri_{S} à l'autre nœud N_{A}. Enfin, l'interface I/O est adaptée pour communiquer avec le serveur de communication multi-plateformes S.

Le module CS de stockage de contenu est adapté pour stocker un ou plusieurs contenus. Les contenus sont produits directement par le nœud récepteur N_{R} dans le cas où celui-ci est un nœud producteur de contenu. En variante, ces contenus sont captés par le nœud récepteur N_{R} lorsque ledit nœud est un nœud intermédiaire faisant partie d'une chaîne de remontée de contenu. Préférentiellement, ce module CS de stockage agit de la même manière qu'une mémoire cache. Comme il a déjà été décrit, ce niveau de qualité de transmission requis QoS est présent dans le nom Name du contenu.

Le module FIB est une table de routage dans le réseau NDN qui maintient une correspondance entre le nom Name du contenu Cₒₙₜ et la face à utiliser pour transmettre ce contenu au nœud émetteur N_{E}.

Le module PIT de stockage est adapté pour maintenir un état des requêtes d'intérêt ainsi que l'ensemble des chemins à utiliser pour relayer le contenu au nœud émetteur N_{E} de la requête d'intérêt principale Ri_{P}.

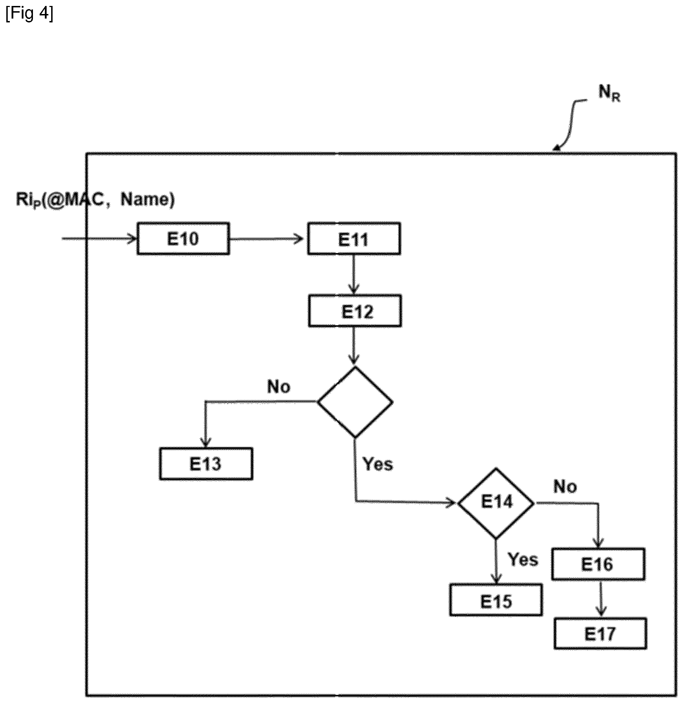

La figure 4 illustre plus particulièrement les étapes du procédé de traitement de la requête d'intérêt principale Ri_{P} reçue par le nœud récepteur N_{R}.

Le procédé comprend ainsi une étape de réception E₁₀ de la requête d'intérêt principale Ri_{p.} Comme il a déjà été précisé, cette requête Riₚ comporte un identifiant @MAC du nœud émetteur N_{E} et un nom Name du contenu C_{ONT}. La requête d'intérêt principale Riₚ est transmise entre le nœud émetteur N_{E} et le nœud récepteur N_{R} selon le chemin de transmission prédéterminé Wₚ qui possède des caractéristiques de transmission Ca.

Dans une étape E₁₁, l'identifiant @MAC du nœud émetteur N_{E} et la forme d'onde FO utilisée pour la transmission de la requête Riₚ sont identifiées par le nœud récepteur N_{R}.

Dans une étape E₁₂, il est procédé à la vérification d'une adéquation entre le niveau de qualité de transmission requis QoS pour la transmission du contenu C_{ONT} et les caractéristiques Ca de transmission du chemin prédéterminé W_{P}. Ces caractéristiques de transmission Ca sont obtenues au cours de cette étape E₁₂ à partir du serveur de communication multi-plateformes. Le niveau de qualité de transmission requis QoS est déduit du nom Name du contenu C_{ONT}.

Dans une étape E₁₃, la requête d'intérêt principale Ri_{P} est rejetée car il est déterminé que les caractéristiques de transmission du chemin prédéterminé W_{P} sont insuffisantes pour une transmission du contenu C_{ONT} vers le nœud émetteur N_{E}. Une réponse NACK de non accord de transfert du contenu C_{ONT} est alors envoyée au nœud émetteur N_{E}.

A l'inverse, dans le cas où il est déterminé que les caractéristiques de transmission sont suffisantes, le procédé de traitement de la requête d'intérêt se poursuit dans une étape de vérification E₁₄ de la présence du contenu C_{ONT} dans le nœud récepteur N_{R}. Si le contenu C_{ONT} est présent dans le nœud récepteur N_{R}, celui-ci est alors transmis dans une étape de transmission E₁₅ au nœud émetteur N_{E} via le chemin de transmission prédéterminé W_{P}.

Si le contenu C_{ONT} n'est pas présent dans le nœud récepteur N_{R}, ce nœud récepteur N_{R} conserve dans une étape E₁₆ la requête d'intérêt principale Ri_{P}. Le module PIT et le module FIB sont alors mis à jour. Dans une étape E₁₇, le nœud récepteur N_{R} transmet alors une requête d'intérêt secondaire Ri_{S} à au moins un autre nœud N_{A} du réseau NDN via un autre chemin de transmission W_{A}. La requête d'intérêt secondaire Ri_{S} comprend l'adresse MAC du nœud récepteur N_{R} ainsi que le nom NAME du contenu C_{ONT}.

Dans le cas où l'autre nœud N_{A} possède le contenu C_{ONT} recherché. Celui-ci est alors transmis au nœud récepteur N_{R} qui le stocke dans le module CS de stockage de contenu. A partir du module FIB et du module PIT du nœud récepteur N_{R}, le contenu C_{ONT} est transmis au nœud émetteur N_{E} via le chemin prédéterminé W_{P}.

L'invention concerne également un programme d'ordinateur comportant des instructions de programme exploitables par le nœud récepteur N_{R} du réseau orienté données NDN. Ces instructions de programme sont notamment exécutées par l'unité centrale 100 de traitement de données pour la mise en œuvre du procédé de traitement de la requête d'intérêt.

L'invention propose ainsi de nouvelles interactions entre le réseau NDN et l'environnement existant telles que :
- un accès de l'unité centrale 100 du nœud à l'interface I/O et notamment à la face sur laquelle la requête d'intérêt a été reçue. La forme d'onde sur laquelle la requête d'intérêt a été reçue est remontée à l'unité centrale 100 et au programme d'ordinateur pour le traitement de ladite requête ;
- une information sur la qualité de transmission demandée dans l'intérêt de l'utilisateur. Cette qualité de transmission correspond aux garanties demandée par le contenu dans le sens retour. Cette qualité de service est indiquée directement dans la convention de nommage NDN. En variante cette qualité de transmission est stockée dans une base de données au sein du nœud, telle que le module CS de stockage de contenu ou toute autre base. Cette base de données peut donner accès à d'autres informations sur les propriétés des contenus (taille des paquets, durée de vie, etc.) ;
- un accès à un module qui répertorie les liens radio, leur utilisation et leur qualité sur chaque forme d'onde. Chaque nœud support de la recherche du contenu dans le réseau NDN doit pouvoir évaluer la qualité du lien sur lequel la requête d'intérêt a été reçue dans le sens retour, afin d'estimer la capacité de ce lien à assurer la qualité de transmission du contenu.
L'invention apporte ainsi les avantages suivants :
- elle permet de réduire les risques d'inondation dans le réseau NDN en filtrant les requêtes d'intérêt inutiles ;
- elle simplifie les algorithmes de transmission étant donné qu'une première sélection de chemin est réalisée ;
- elle assure une meilleure cohabitation du réseau NDN avec une mise en réseau plus classique de type IP grâces à des tables de qualité du lien radio ;
- elle permet de garder une compatibilité avec le protocole NDN en nécessitant des modifications mineures des implémentations existantes ;
- elle permet d'adapter dynamiquement la recherche du contenu aux conditions du réseau et à sa charge en trafic.

## Revendications

1. Procédé de traitement d'une requête d'intérêt reçue par un nœud récepteur (N_{R}) d'un réseau orienté données (NDN), ladite requête d'intérêt, dite requête d'intérêt principale (Ri_{P}), provenant d'un nœud émetteur (N_{E}) pour l'accès à un contenu (C_{ONT}), ledit procédé de traitement comprenant dans ledit nœud récepteur (N_{R}) :
- une étape de réception (E₁₀) de ladite requête d'intérêt principale (Ri_{P}), ladite requête d'intérêt principale (Ri_{P}) comportant un identifiant (@MAC) du nœud émetteur (N_{E}) et un nom (Name) du contenu (C_{ONT}), ladite requête d'intérêt principale (Rip) étant transmise vers le nœud récepteur (N_{R}) selon un chemin de transmission prédéterminé (Wₚ) entre ledit nœud émetteur (N_{E}) et ledit nœud récepteur (N_{R}), ledit chemin de transmission prédéterminé (Wₚ) ayant des caractéristiques de transmission (Ca) associées ;
- une étape de vérification (E₁₂) d'une adéquation entre un niveau de qualité de transmission requis (QoS) pour la transmission dudit contenu (C_{ONT}), dans le sens retour allant du chemin du nœud récepteur vers le nœud émetteur, et les caractéristiques (Ca) de transmission du chemin prédéterminé (W_{P});
et dans le cas où lesdites caractéristiques de transmission du chemin prédéterminé (W_{P}) sont insuffisantes pour une transmission du contenu (C_{ONT}) vers le nœud émetteur (N_{E}), la requête d'intérêt principale (Ri_{P}) est rejetée (E₁₃).

2. Procédé de traitement selon la revendication 1, dans lequel dans le cas où les caractéristiques de transmission (Ca) du chemin prédéterminé (Wₚ) sont suffisantes pour la transmission du contenu (C_{ONT}), ledit procédé de traitement comprend :
- une étape de vérification (E₁₄) de la présence du contenu (C_{ONT}) dans le nœud récepteur (N_{R}) ;
et si le contenu (C_{ONT}) est présent dans ledit nœud récepteur (N_{R}), ledit procédé de traitement comprend une étape de transmission (E₁₅) dudit contenu (C_{ONT}) vers le nœud émetteur (N_{E}) via le chemin de transmission prédéterminé (W_{P}).

3. Procédé de traitement selon la revendication 2, dans lequel si le contenu (C_{ONT}) n'est pas présent dans le nœud récepteur (N_{R}), ledit nœud récepteur (N_{R}) conserve (E₁₆) la requête d'intérêt principale (Ri_{P}) et transmet (E₁₇) une requête d'intérêt secondaire (Ri_{S}) à au moins un autre nœud (N_{A}) du réseau (NDN) via un autre chemin de transmission (W_{A}).

4. Procédé de traitement selon la revendication 3, dans lequel le nœud récepteur (N_{R}) :
- reçoit le contenu (C_{ONT}) transmis par l'autre nœud (N_{A}) via l'autre chemin (W_{A}),
- stocke ledit contenu (C_{ONT}) ;
- transmet ledit contenu (C_{ONT}) au nœud émetteur (N_{E}) via le chemin prédéterminé (W_{P}).

5. Procédé de traitement selon l'une quelconque des revendications 1 à 4, dans lequel ledit procédé comprend, suite à la réception de la requête d'intérêt principale par le nœud récepteur (N_{R}) :
- une étape (E₁₁) d'identification de l'identifiant (@MAC) du nœud émetteur (N_{E}) et d'une forme d'onde (FO) utilisée pour la transmission de la requête d'intérêt principale (Ri_{P}).

6. Procédé de traitement selon la revendication 5, dans lequel les caractéristiques (C_{A}) de transmission du chemin prédéterminé (W_{P}) sont obtenues à partir d'un serveur de communication multi-plateformes (S) externe au réseau orienté données (NDN).

7. Procédé de traitement selon l'une quelconque des revendications 1 à 6, dans lequel au moins une des caractéristiques (Ca) de transmission du chemin prédéterminé (W_{P}) est choisie parmi une liste de caractéristiques comprenant :
- un débit du chemin prédéterminé (W_{P}) ;
- une latence du chemin prédéterminé (W_{P}) ;
- un taux de perte ;
- un durée de vie du chemin prédéterminé (W_{P}) ;
- une souveraineté du chemin prédéterminé (W_{P}) ;
- un niveau de protection du chemin prédéterminé (W_{P}) ;
- un coût d'utilisation du chemin prédéterminé (W_{P}).

8. Nœud récepteur d'un réseau orienté données (NDN), ledit nœud récepteur (N_{R}) étant adapté pour recevoir une requête d'intérêt (Ri_{P}) pour l'accès à un contenu (C_{ONT}) provenant d'un nœud émetteur (N_{E}), ledit nœud récepteur (N_{R}) comprenant les éléments suivants :
- une unité centrale (100) de traitement de données ;
- une interface entrée/sortie (I/O) ;
- un module (CS) de stockage de contenu ;
- un module (FIB) de stockage d'informations de relayage ;
- un module (PIT) de stockage de requête d'intérêt en attente,
lesdits éléments étant configurés pour mettre en œuvre les étapes d'un procédé de traitement de la requête d'intérêt (Ri_{P}) reçue par ledit nœud récepteur (N_{R}), selon l'une quelconque des revendications 1 à 7.

9. Nœud récepteur selon la revendication 8 dans lequel l'interface entrée/sortie (I/O) est compatible avec les formes d'onde 5G.

10. Réseau orienté données comportant au moins un nœud récepteur (N_{R}) selon l'une quelconque des revendications 8 ou 9.

11. Réseau orienté données (NDN) selon la revendication 10 dans lequel le réseau orienté données est utilisé pour la transmission d'un contenu (C_{ONT}) à un utilisateur.

12. Produit programme d'ordinateur comportant des instructions de programme exploitables par un nœud récepteur (N_{R}) d'un réseau orienté données (NDN) selon l'une quelconque des revendications 8 ou 9 , ledit nœud récepteur (N_{R}) étant adapté pour recevoir une requête d'intérêt (Ri_{P}) provenant d'un nœud émetteur (N_{E}) en vue de l'accès à un contenu (C_{ONT}), lesdites instructions de programme lorsqu'elles sont exécutées par ledit nœud récepteur (N_{R}) déclenchant la mise en œuvre d'un procédé de traitement de la requête d'intérêt (Ri_{P}) selon l'une quelconque des revendications 1 à 7.

## Patentansprüche

1. Verfahren zur Bearbeitung einer von einem Empfangsknoten (N_{R}) eines Named-Data-Netzwerks (NDN) empfangenen Interessenanfrage, wobei die Interessenanfrage, Hauptinteressenanfrage (Ri_{P}) genannt, von einem Sendeknoten (N_{E}) für den Zugriff auf einen Inhalt (C_{ONT}) stammt, wobei das Verfahren zur Bearbeitung in dem Empfangsknoten (N_{R}) umfasst:
- einen Schritt zum Empfangen (E₁₀) der Hauptinteressenanfrage (Ri_{P}), wobei die Hauptinteressenanfrage (Ri_{P}) einen Benutzernamen (@MAC) des Sendeknotens (N_{E}) und einen Name (Name) des Inhalts (C_{ONT}) beinhaltet, wobei die Hauptinteressenanfrage (Ri_{P}) gemäß einem vorbestimmten Übertragungsweg (Wₚ) zwischen dem Sendeknoten (N_{E}) und dem Empfangsknoten (N_{R}) zum Empfangsknoten (N_{R}) übertragen wird, wobei der vorbestimmte Übertragungsweg (Wₚ) zugeordnete Übertragungseigenschaften (Ca) aufweist;
- einen Schritt zum Verifizieren (E₁₂) einer Übereinstimmung zwischen einer erforderlichen Übertragungsqualitätsstufe (QoS) für die Übertragung des Inhalts (C_{ONT}), in der Rückwärtsrichtung, die vom Weg des Empfangsknotens zum Sendeknoten verläuft, und den Übertragungseigenschaften (Ca) des vorbestimmten Weges (Wₚ);
und falls die Übertragungseigenschaften des vorbestimmten Weges (Wₚ) unzureichend für eine Übertragung des Inhalts (C_{ONT}) zum Sendeknoten (N_{E}) sind, die Hauptinteressenanfrage (Ri_{P}) verworfen wird (E₁₃).

2. Verfahren zur Bearbeitung nach Anspruch 1, wobei das Verfahren zur Bearbeitung, falls die Übertragungseigenschaften (Ca) des vorbestimmten Weges (Wₚ) unzureichend für die Übertragung des Inhalts (C_{ONT}) sind, umfasst:
- einen Schritt zum Verifizieren (E₁₄) des Vorhandenseins des Inhalts (C_{ONT}) in dem Empfangsknoten (N_{R});
und wenn der Inhalt (C_{ONT}) im Empfangsknoten (N_{R}) vorhanden ist, das Verfahren zur Bearbeitung einen Schritt zum Übertragen (E₁₅) des Inhalts (C_{ONT}) zum Sendeknoten (N_{E}) über den vorbestimmten Übertragungsweg (Wₚ) umfasst.

3. Verfahren zur Bearbeitung nach Anspruch 2, wobei, wenn der Inhalt (C_{ONT}) nicht im Empfangsknoten (N_{R}) vorhanden ist, der Empfangsknoten (N_{R}) die Hauptinteressenanfrage (Ri_{P}) beibehält (E₁₆) und eine Sekundärinteressenanfrage (Ri_{S}) über einen anderen Übertragungsweg (W_{A}) zu mindestens einem anderen Knoten (N_{A}) des Netzwerks (NDN) überträgt (E₁₇).

4. Verfahren zur Behandlung nach Anspruch 3, wobei der Empfangsknoten (N_{R}):
- den durch den anderen Knoten (N_{A}) über den anderen Weg (W_{A}) übertragenen Inhalt (C_{ONT}) empfängt,
- den Inhalt (C_{ONT}) speichert;
- den Inhalt (C_{ONT}) über den vorbestimmten Weg (Wₚ zum Sendeknoten (N_{E}) ) überträgt.

5. Verfahren zur Behandlung nach einem der Ansprüche 1 à 4, wobei das Verfahren nach dem Empfang der Hauptinteressenanfrage durch den Empfangsknoten (N_{R}) umfasst:
- einen Schritt (E₁₁) zur Identifizierung des Benutzernamens (@MAC) des Sendeknotens (N_{E}) und einer Wellenform (FO), die zur Übertragung der Hauptinteressenanfrage (Ri_{P}) verwendet wird.

6. Verfahren zur Behandlung nach Anspruch 5, wobei die Übertragungseigenschaften (C_{A}) des vorbestimmten Weges (Wₚ) von einem Kommunikationsserver für mehrere Plattformen (S) außerhalb des Named-Data-Netzwerks (NDN) erhalten werden.

7. Verfahren zur Bearbeitung nach einem der Ansprüche 1 bis 6, wobei mindestens eine der Übertragungseigenschaften (Ca) des vorbestimmten Weges (Wₚ) aus einer Liste von Eigenschaften ausgewählt wird, umfassend:
- einen Volumenstrom des vorbestimmten Weges (Wₚ);
- eine Latenz des vorbestimmten Weges (Wₚ);
- eine Verlustrate;
- eine Laufzeit des vorbestimmten Weges (Wₚ);
- eine Souveränität des vorbestimmten Weges (Wₚ);
- eine Schutzstufe des vorbestimmten Weges (Wₚ);
- einen Nutzungsaufwand des vorbestimmten Weges (Wₚ).

8. Empfangsknoten eines Named-Data-Netzwerks (NDN), wobei der Empfangsknoten (N_{R}) angepasst ist, um eine Interessenanfrage (Ri_{P}) für den Zugriff auf einen Inhalt (C_{ONT}) zu empfangen, der von einem Sendeknoten N_{E}) stammt, wobei der Empfangsknoten (N_{R}) die folgenden Elemente umfasst:
- eine Zentraleinheit (100) zur Datenverarbeitung;
- eine Eingangs-/Ausgangsschnittstelle (I/O);
- ein Modul (CS) zum Speichern von Inhalt;
- ein Modul (FIB) zum Speichern von Weiterleitungsinformationen;
- ein Modul (PIT) zum Speichern von anstehenden Interessenanfragen,
wobei die Elemente konfiguriert sind, um die Schritte eines Verfahrens zur Bearbeitung der Interessenanfrage (Ri_{P}), die von dem Empfangsknoten (N_{R}) empfangen wird, nach einem der Ansprüche 1 bis 7 umzusetzen.

9. Empfangsknoten nach Anspruch 8, wobei die Eingangs-/Ausgangsschnittstelle (I/O) mit den 5G-Wellenformen kompatibel ist.

10. Named-Data-Netzwerk, das mindestens einen Empfangsknoten (N_{R}) nach einem der Ansprüche 8 oder 9 beinhaltet.

11. Named-Data-Netzwerk (NDN) nach Anspruch 10, wobei das Named-Data-Netzwerk zur Übertragung eines Inhalts (C_{ONT}) zu einem Benutzer verwendet wird.

12. Computerprogrammprodukt, das von einem Empfangsknoten (N_{R}) eines Named-Data-Netzwerks (NDN) nach einem der Ansprüche 8 oder 9 ausführbare Programmanweisungen beinhaltet, wobei der Empfangsknoten (N_{R}) angepasst ist, um eine Interessenanfrage (Ri_{P}), die von einem Sendeknoten (N_{E}) stammt, in Hinblick auf den Zugriff auf einen Inhalt (C_{ONT}) zu empfangen, wobei die Programmanweisungen, wenn sie von dem Empfangsknoten (N_{R}) ausgeführt werden, die Umsetzung eines Verfahrens zur Bearbeitung der Interessenanfrage (Ri_{P}) nach einem der Ansprüche 1 bis 7 auslösen.

## Claims

1. Method for processing a request of interest received by a receiver node (N_{R}) of a node data network (NDN), said request of interest, called main request of interest (Ri_{P}), coming from a transmitting node (N_{E}) for access to content (C_{ONT}), said processing method comprising, in said receiver node (N_{R}):
- a step (E₁₀) for receiving said main request of interest (Ri_{P}), said main request of interest (Ri_{P}) comprising an identifier (@MAC) of the transmitting node (N_{E}) and a name (Name) of the content (C_{ONT}), said main request of interest (Ri_{P}) being transmitted to the receiver node (N_{R}) along a predetermined transmission path (Wₚ) between said transmitting node (N_{E}) and said receiver node (N_{R}), said predetermined transmission path (Wₚ) having associated transmission features (Ca);
- a step (E₁₂) of verifying a match between a transmission quality level (QoS) required for transmitting said content (C_{ONT}), in the return direction, going from the path of the receiver node to the transmitting node, and the transmission features (Ca) of the predetermined path (Wₚ);
and in the case where said transmission features of the predetermined path (Wₚ) are insufficient for a transmission of the content (C_{ONT}) to the transmitting node (N_{E}), the main request of interest (Ri_{P}) is rejected (E₁₃).

2. Processing method according to claim 1, wherein, in the case where the transmission features (Ca) of the predetermined path (Wₚ) are sufficient for transmitting the content (C_{ONT}), said processing method comprises:
- a step (E₁₄) of verifying the presence of the content (C_{ONT}) in the receiver node (N_{R});
and, if the content (C_{ONT}) is present in said receiver node (N_{R}), said processing method comprises a step (E₁₅) of transmitting said content (C_{ONT}) to the transmitting node (N_{E}) via the predetermined transmission path (Wₚ).

3. Processing method according to claim 2, wherein if the content (C_{ONT}) is not present in the receiver node (N_{R}), said receiver node (N_{R}) preserves (E₁₆) the main request of interest (Ri_{P}) and transmits (E₁₇) a secondary request of interest (Ri_{S}) to at least one other node (N_{A}) of the network (NDN) via another transmission path (W_{A}).

4. Processing method according to claim 3, wherein the receiver node (N_{R}):
- receives the content (C_{ONT}) transmitted by the other node (N_{A}) via the other path (W_{A});
- stores said content (C_{ONT});
- transmits said content (C_{ONT}) to the transmitting node (N_{E}) via the predetermined path (W_{P}).

5. Processing method according to any one of claims 1 to 4, wherein said method comprises, following the receiving of the main request of interest by the receiver node (N_{R}):
- a step (E₁₁) of identifying the identifier (@MAC) of the transmitting node (N_{E}) and a waveform (FO) used for transmitting the main request of interest (Ri_{P}).

6. Processing method according to claim 5, wherein the transmission features (C_{A}) of the predetermined path (W_{P}) are obtained from a multiplatform communication server (S), external to the node data network (NDN).

7. Processing method according to any one of claims 1 to 6, wherein at least one of the transmission features (Ca) of the predetermined path (Wₚ) is chosen from among a list of features, comprising:
- a flow rate of the predetermined path (Wₚ);
- a latency of the predetermined path (Wₚ);
- a loss rate;
- a lifespan of the predetermined path (Wₚ);
- a sovereignty of the predetermined path (Wₚ);
- a protection level of the predetermined path (Wₚ);
- a cost of use of the predetermined path (Wₚ).

8. Receiver node of a node data network (NDN), said receiver node (N_{R}) being adapted to receive a request of interest (Ri_{P}) for access to content (C_{ONT}) coming from a transmitting node (N_{E}), said receiver node (N_{R}) comprising the following elements:
- a central data processing unit (100);
- an input/output (I/O) interface;
- a content storage module (CS);
- a relay information storage module (FIB);
- an awaiting request of interest storage module (PIT),
said elements being configured to implement the steps of a method for processing the request of interest (Ri_{P}) received by said receiver node (N_{R}), according to any one of claims 1 to 7.

9. Receiver node according to claim 8, wherein the input/output (I/O) interface is compatible with 5G waveforms.

10. Node data network comprising at least one receiver node (N_{R}) according to any one of claims 8 or 9.

11. Node data network (NDN) according to claim 10, wherein the node data network is used for transmitting content (C_{ONT}) to a user.

12. Computer program product comprising program instructions which can be run by a receiver node (N_{R}) of a node data network (NDN) according to any one of claims 8 or 9, said receiver node (N_{R}) being adapted to receive a request of interest (Ri_{P}) coming from a transmitting node (N_{E}) in view of accessing content (C_{ONT}), said program instructions, when they are executed by said receiver node (N_{R}) triggering the implementation of a method for processing the request of interest (Ri_{P}) according to any one of claims 1 to 7.
